# EUROPEAN PATENT APPLICATION

(11) **EP 4 183 515 A1**
(43) Date of publication of application: **24.05.2023**
(21) Application number: 21209936.0
(22) Date of filing: 23.11.2021
(51) Int. Cl.: B23K 26/08, B23K 26/38, B23K 37/04, B05D 5/08, B05D 7/00, B23K 26/10, B23K 26/142, B23K 26/70, B23Q 1/03, B25H 1/02, C09D 5/00, C09D 7/61, B32B 18/00, B23K 101/18

(54) **LASER CUTTING MACHINE**

(71) Applicant: Bystronic Laser AG, 3362 Niederönz (CH)
(72) Inventor: BERGER, Michael, 3005 Bern (CH); IMBODEN, Ernest, 4556 Steinhof (CH)
(74) Representative: Frei Patent Attorneys

(57) **Abstract**

The laser cutting machine in addition to a laser cutting head and a laser source comprises a workpiece support (200), the workpiece support comprising a metallic grate. At least a part, namely a support portion, of a surface of the metallic grate is coated by a for example non-metallic coating. Examples of such surface coatings include ceramic coatings.

## Description

### FIELD OF THE INVENTION

The invention is in the field of laser cutting of workpieces. More in particular, it relates to a laser cutting machine, to a workpiece support for a laser cutting machine, and to a method of manufacturing a workpiece support.

### BACKGROUND OF THE INVENTION

In laser cutting of workpieces, a directed laser beam moves relative to the workpiece, especially a metal workpiece, to locally melt the material at the position of incidence of the laser beam on the workpiece. This produces a laser cut.

During the laser cutting process, the workpiece is usually supported on a support, especially, a support defining a horizontal area of support. Such support may be a grate that may comprise a two-dimensional array of discrete support spots. Such support spots may be formed by discrete grate elements, which are for example vertically arranged parallel plates having support protrusions that protrude upwardly and define the support spots. Alternatively, the grate may be a for example rectangular or honeycomb shaped grating.

Modern laser cutting machines also direct a gas jet onto the position of incidence of the laser beam. The gas jet may assist the removal ("blowing") of molten material.

Molten material removed from the cut may stick to the workpiece support so that after some time the workpiece support's shape becomes undefined. Due to the growth of the elements forming the workpiece support (such as the grate elements) by such sticking, this is a self-enhancing effect, i.e. with time the tendency of material sticking to the support will enhance. Also, during the cutting process, cut out parts as well as cut-out small rest pieces may be caused to be welded or soldered to the support by molten and re-solidified workpiece material. This complicates removal of the cut parts after the cutting process and interferes with subsequent automated feeding of new workpieces which, when lying on sticking remaining rest pieces, will be supported in an uneven manner, leading to inaccurateness or even damages in subsequent cutting stages. This necessitates cleaning steps between subsequent cutting processes and in addition a frequent replacement of the grate.

### SUMMARY OF THE INVENTION

Accordingly, it is an object of the present invention to provide a laser cutting machine overcoming drawbacks of prior art cutting machines and being equipped in a manner that problems associated with molten and re-solidified workpiece material sticking to the support are avoided or at least reduced.

This object is achieved by a laser cutting machine, a workpiece support for a laser cutting machine and a method as defined in the claims.

According to an aspect of the invention, a laser cutting machine is provided, the laser cutting machine comprising a workpiece support, the workpiece support comprising a metallic grate. At least a support portion of a surface of the metallic grate, namely especially an array of support spots, is coated by coating, for example a non-metallic coating.

The (non-metallic) coating serves as an anti-adhesive (anti-adherent) coating and has according properties, i.e. the coating is equipped to have anti-adhesive properties for metallic workpieces. Especially, it may have anti-adhesive properties for metallic workpieces that are at temperatures slightly below their melting temperature, and/or for the workpiece material when it is above its melting temperature. More in concrete, adhesion of standard workpiece material, especially of steel, to the coating surface is reduced compared to the uncoated grate material.

The support portion, which at least comprises the coating, is the portion against which the workpiece lies during operation. The support portion in many embodiments will face upwardly.

Especially, when a flat plate-like or sheet like workpiece is placed on the workpiece support, it will rest horizontally on the support spots, which may for example be formed by upward facing support protrusions the upper ends of which are all on a common horizontal plane. Because of the coating that covers at least the support spots, there will be a reduced tendency of molten and re-solidified metal to stick to the grate in a region around the support spots. This will prevent remaining small pieces of the workpiece from sticking to the grate after having been cut out - the small pieces will, after having been cut out, fall down from the workpiece plane. Also, the uncontrolled growth of the grate due molten and re-solidified metal sticking to it will be reduced due to the coating.

If the coating in the present context is non-metallic, it does not, as a whole, have metallic properties. This neither excludes the presence of metallic elements in a composition of the coating material or a constituent thereof, nor does it exclude that small metallic particles may be present as a filler in the coating.

The coating may be an inorganic coating, or comprise a layer of an inorganic material, such as of a ceramic material. In addition or as an alternative, the coating may be amorphous, e.g. a glass. In a group of embodiments, the coating may consist of inorganic material, i.e. the coating may be an inorganic coating. In addition to comprising a layer of inorganic material, the coating may comprise a polymer, as explained in more detail hereinafter.

In embodiments, the coating - or, if it comprises more than one layer, its outer layer or an inner layer, may be manufactured by a sol-gel process, i.e. may be a sol-gel material.

Especially, the coating may comprise a first, inner layer, and a second outer layer. The inner layer may be in direct contact with the metallic material of the metallic element, or a comparably thinner layer of an adhesion promoting layer may be between the metallic material and the inner layer. The outer layer is applied directly or indirectly to the inner layer so that it forms the surface or surface portion - especially including the support spots - of the grate. The inner layer may be of a thermoplastic material.

In an embodiment, the inner layer may be of a material or material combination that is softer than the material of the outer layer. The combination of a softer inner layer and a comparably harder outer layer may allow the user to scrub off or remove in another way the material of the outer layer once too much workpiece material sticks to it despite any anti-adhesive properties of the outer layer. This makes an easy regeneration of the grate elements possible - after removing the outer layer mechanically and/or by a treatment involving heat, the outer layer (and, if necessary, before this also the inner layer at least on part) may be applied to the grate element anew.

In an example, the inner layer of a two-layer coating (or one of the inner layers of a multilayer coating, the "inner layers" being the layers other than the outermost layer) may comprise a thermoplastic material, such as one of Polyaryletherketone (PAEK), a Liquid Crystal Polymer (LCP), Polyetherketone (PEK), Polyether ether ketone (PEEK), Polyphenylene sulfide (PPS), a polyamide (PA), or another high temperature resistant thermoplastic polymer, or any other thermoplastic material suitable for industrial purposes or a mixture of any sub-group of these polymers. In addition or as an alternative to comprising a thermoplastic polymer, the inner layer (or one of the inner layers, respectively) may comprise a thermosetting polymer, an elastomer or other material comparably softer than the outer layer. In addition to the thermoplastic polymer or other comparably softer material of the herein discussed kind, the inner layer may further comprise a thermoplastic fluoropolymer that reduces the adhesion of the outer layer(s) and thereby eases their scrubbing off. In a group of embodiments, the inner layer may comprise between 10% and 40%, especially between 15% and 30% (percentages herein denoting the mass fraction) of such a fluoropolymer admixture In addition or as an alternative, the inner layer may comprise a non-polymeric filler, such as a filler of particles of a metal, a silicate, silica, ceramics, a glass, other mineral particles etc. (for example up to 50%).

In embodiments, the inner layer (or one of the inner layers) of the coating may comprise one of a PEEK-SiO₂ mixture, a FeCrAl and/or FeCrAl+Cr₃C₂ ceramics. The outer layer may be of a non-metallic inorganic material such as a ceramic; the outer layer may in addition or as an alternative be inorganic, such as glassy.

In embodiments, the coating layer or the outer layer may be one of an amorphous or nano crystallized ZrO₂ or SiO₂ glass, a FeCrAl and/or FeCrAl+Cr₃C₂ ceramics.

In a group of examples of a coating may be a ceramic coating or may comprise at least on outer layer of a ceramics. For example, the coating may be a coating as developed and offered for cookware (frying pans or the like) as anti-stick coating. An example comprises the coating as offered under the trade name DURAQUARZ^{®} by acs Coating Systems GmbH in Germany. Another example is the coating disclosed in US 3459601.

If the coating is a ceramic coating, or comprises an according layer, this ceramic material may for example be an oxide, nitride or boride, that has been produced by firing at high temperature.

The coating - or at least a coating layer of the coating, such as the outermost layer - may be amorphous, crystalline (including microcrystalline), comprise crystallites in a vitreous matrix or be another heterogeneous mixture of different states.

The coating may be glazed so as to reduce porosity and provide a smooth surface.

In a group of embodiments, at least one layer of the coating (if the coating is a single-layer coating, this pertains to the whole coating) is a composite layer comprising a polymeric material embedding a filler, especially an inorganic filler. Such a filler may for example comprise at least one of a ceramic material, a non-ceramic, non-metallic amorphous material, a metal oxide, a metal. The composite may be heavily loaded in that the filler constitutes at least 50% (mass-percent) or at least 50 vol% of the composite.

In a sub-group of these embodiments, the coating, or at least one layer of a coating if the coating comprises a plurality of layers, may comprise a matrix of a thermoplastic material having a relatively high melting temperature or softening temperature embedding the filler. In this, the filler may comprise particles of a ceramics, a glass, a silicate, silica, other mineral particles or metallic particles suspended in. The matrix material may for example be PEEK, PAEK, an LCP, PEK, PPS, a PA, etc..

In another sub-group of these embodiments, the matrix may be of a curable and cured polymer material, for example a resin. Then, the coating, or at least one layer of the coating, may comprise a filler, such as particles of a ceramics, a glass, a silicate, silica, other mineral particles or metallic particles suspended in this cured polymer material. In this, curing (from a monomer suspended in a solvent or from a partially polymerized prepolymer; for example polycondensation or chain polymerization) may take place on the surface of the workpiece support. Thereby, the coating, or the layer of the coating, may for example be added by spray coating or dip coating or otherwise in a flowable form, followed by a subsequent irreversible hardening process. Examples of suitable matrix materials include phenolic resins, epoxy resins, photopolymers (such as polymers known to be suitable for lithography/3D-printing, etc.). The curing process may be an actively initiated process according to any principle known from the prior art, such as curing by heat input (for example by irradiating with electromagnetic radiation for heating up), a UV curing process, a chemically initiated curing process, etc. Instead of being actively initiated, the curing process may also take place by just letting the material cure over time at room temperature.

In addition or as an alternative to being curable, a material embedding an inorganic filler material may comprise a solvent that causes the coating material to be initially flowable or enhances the flowability. Application of the coating may then comprise the solvent to be removed ('drying'), for example by evaporation, and/or to be chemically bonded to the filler by an appropriate process.

A total thickness of the coating may be between 0.001 µm and 1000 µm or between 0.01 µm and 500 µm, especially between 1 µm and 300 µm, for example between 5 µm and 100 µm.

The grate may be a grate of elements of any suitable metal material, for example of a material known in the art for being suitable for workpiece support grates, such as steel or copper coated steel.

The grate may be such as to form a regular pattern of discrete support protrusions that form the support spots. For example, such support protrusions may be protrusions of plates (carriers) arranged vertically and parallel to each other. Alternatively, such support protrusions may be formed by a three-dimensional grating. If the coating does not coat all surfaces of the grate, it may be present at least on the support protrusions.

In addition to the workpiece support, the laser cutting machine comprises a laser cutting head, and a laser source, the machine being equipped for causing a relative movement between the laser cutting head and the workpiece support and being equipped to emit a laser beam produced by the laser source from the laser cutting head towards the workpiece support for making a controlled cut in a workpiece supported by the workpiece support.

In addition to concerning a laser cutting machine, the present invention also concerns a workpiece support for such a laser cutting machine.

A method of manufacturing a workpiece support of the kind described in this text may comprise the steps of providing at least one metal plate, of cutting a plurality of metal grate elements from the at least one metal plate, of coating at least a part of the surfaces of the metal grate elements by a nonmetallic coating, and of arranging the metal grate elements to be mounted vertically, parallel to each other and at distances, especially regular distances, from each other.

According to an option, the coating is applied to be foil-like and/or peelable. This may for example be achieved by a suitable inner layer in a coating of several layers, or a comparably thin interlayer between the metal material of the grate element and the coating if it is for example inorganic. Such peeling-off makes the cleaning process efficient and renders the grate elements reusable, i.e., it is possible that the grate elements are coated again after cleaning.

More in general, a method of refurbishing a workpiece support of the kind described in this text may firstly comprise mechanically removing the (for example non-metallic) coating or at least an outer layer thereof from the grate, at least at the support spots. In this, the step of mechanically removing may comprise peeling off, scrubbing off, sandblasting or any other mechanical removal technique. The method of repairing subsequently may comprise applying a new coating after this mechanical removal step. If the coating has a plurality of layers, the step may comprise adding anew at least the outermost layer of the coating.

To this end, a system comprising a laser cutting machine of the kind described in the present text may further comprise a removal device, such as a brush or a scraper, especially a motorized removal device equipped to automatically remove the coating with material sticking thereto. The system may further comprise a coating device, especially a device for automated coating. Such coating device may for example comprise a spray unit for spraying the coating onto the grate elements and, if necessary, a curing or drying unit for initiating the curing process (by irradiating, for example by UV radiation, by heating for thermal curing or removing a solvent (drying), etc.) and/or for removing a solvent to harden the sprayed coating. In embodiments, curing and/or drying may be initiated by the laser head itself in that the laser, after spraying, impinges the support spots sequentially by radiation energy, for example for heating them above a curing temperature and/or accelerating a drying process. In addition or as an alternative to causing or accelerating a hardening process, such heating may be used to modify the surface of the coating after its application, for example for glazing.

In such a system, the removal device and/or the coating device may be present as parts of the laser cutting machine. For example, the laser cutting machine may comprise, in addition to a bridge holding the laser cutting head, a cleaning bridge carrying the cleaning device, such as a brush or scraper and/or a spraying bridge with at least one spraying nozzle for spraying the coating material onto the workpiece and/or, if necessary, a bridge carrying an energy emitting device initiating or accelerating the hardening, such as a UV lamp or an IR heating lamp.

As an alternative to being present as parts of the laser cutting machine the removal device, the coating device and/or, if applicable, the energy emitting device may belong to a separate stage. The system may then allow the workpiece support to be removed from the laser cutting machine body that comprises the laser cutting head and to be moved to the removal and/or coating stage that comprises the removal device and/or coating device, respectively, as well as, optionally, the energy emitting device.

### BRIEF DESCRIPTION OF THE DRAWINGS

Hereinafter, embodiments of the present invention are described in more detail referring to drawings. The drawings are schematic and not to scale. In the drawings, same reference numbers refer to same or similar components. They show:
- Fig. 1:: A laser cutting machine;
- Fig. 2:: In part, a workpiece support;
- Fig. 3:: a cutout of a view of a series of grate elements of a workpiece support;
- Fig. 4: a grate element in section;
- Fig. 5: a further grate element in section;
- Fig. 6: a coating device and a workpiece support
- Fig. 7: a grid cleaning device; and
- Fig. 8: a laser cutting system comprising a laser cutting machine, a coating device and a grid cleaning device.

### DESCRIPTION OF THE PREFERRED EMBODIMENTS

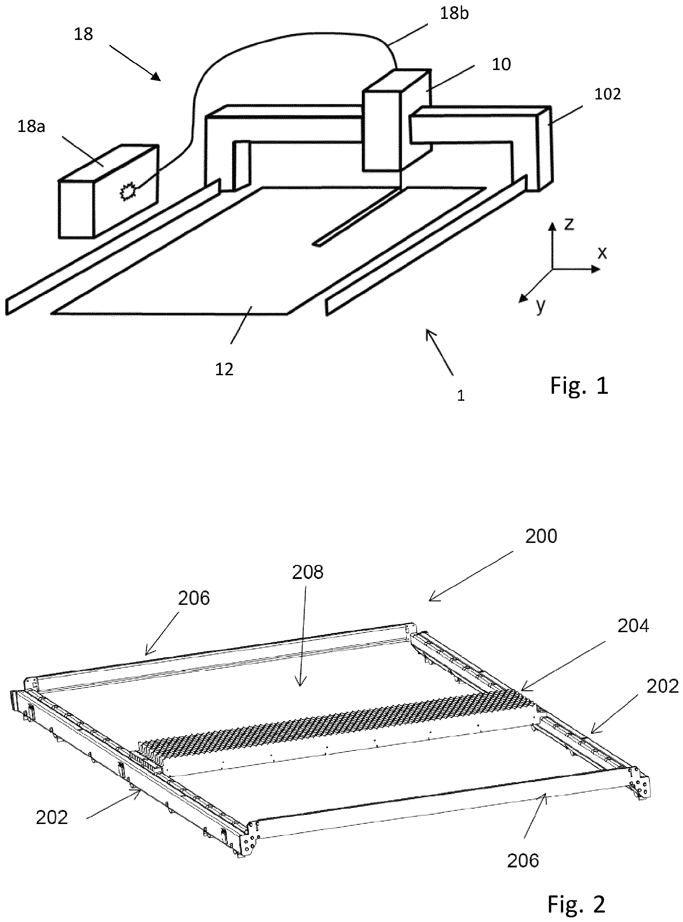

**Figure 1** shows an example of a laser cutting machine 1. The machine comprises a laser source 18 comprising a laser source module 18a and a transport fiber 18b, a laser cutting head 10, and a laser head moving mechanism. A workpiece 12 is supported by a workpiece support as described hereinafter. The laser cutting head moving mechanism comprises a bridge 102 relative to which the laser cutting head 10 is movable in x direction), and which itself is movable, for example on a pair or rails, in y direction relative to the working table and the workpiece 12. The workpiece 12 may be a metal sheet that is cut by a laser beam emitted by the laser cutting head. The laser beam emitted by the laser cutting head will generally propagate into the downward (-z)-Direction.

The workpiece support 200 is shown, in part, in **Figure** 2. The workpieces support comprises a rectangular frame on which a plurality of grate elements 204 is mounted. Two support members 202 form together with two transverse beams 206 the rectangular frame, which defines a grate space 208. The grate elements 204 are hinged on the support members 202. For ensuring a well-defined arrangement of the grate elements 204, the support members 202 may comprise positioning aids, such as notches arranged at regular distances from each other. In Fig. 2, only a small section of the grate space 208 is depicted to have grate elements 204; in practice for operation the whole grate space 208 or at least a major portion of it will comprise grate elements 204.

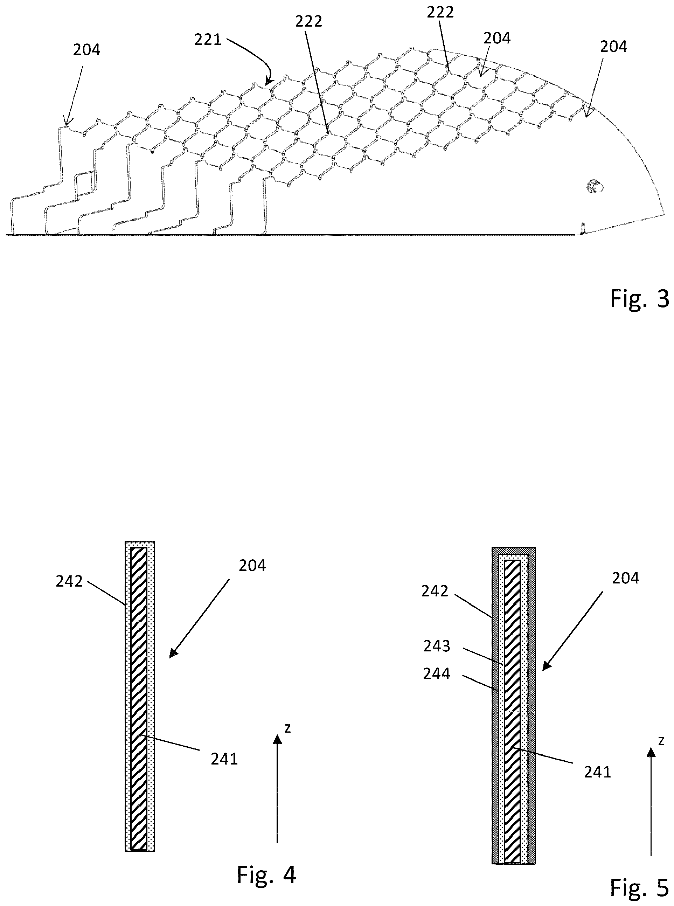

**Figure** 3 depicts a cutout of a view of a series of grate elements 204. The grate elements 204 are dimensionally stiff metal plates arranged, in the depicted embodiment, vertically, parallel to each other, and at equal spaces. "Arranged vertically" means that the plates are arranged such that the planes defined by the plates are vertical. The shape of the grate elements is such that on the upper, upwardly facing edge 221 (referring to the vertical arrangement) is not straight but has a structure forming an array of support protrusions 222 sticking out upwardly. The support protrusions both, of a particular grate element 204 and between the grate elements all have an equal vertical (z-) positions whereby they together form an array of support spots and support a plane, sheet-like workpiece lying horizontally on the workpiece support. The support protrusions 222 may optionally be rounded, as shown in Fig. 3. Support protrusions may be formed by any suitable shape, including undulated shapes, triangular shapes, for example a sawtooth shape, etc.

The grate elements 204 may themselves be manufactured by being laser cut from a plate of a suitable metal.

In contrast to the prior art, however, the metal material of the grate elements at least at the locations of the support protrusions is coated by a for example non-metallic coating. This is illustrated in **Figure 4** showing, schematically, a cross section through a grate element. The grate element comprises a metal plate 241, for example of steel or copper coated steel or aluminum.

The grate element further comprises a coating 242 of the metal plate, the coating being of a nonmetallic material, for example of ceramics or of a non-ceramic amorphous (glassy) material. Especially, the coating may be of any one of the materials or material combination mentioned in the present text, such as an industrial ceramic, such as alumina, boron carbide, silicon nitride, silicon carbide, a FeCrAl and/or FeCrAl+Cr₃C₂ ceramics, etc. The coating covers at least the upwardly facing edge, i.e. the surface of the upwardly facing small side of the plate, at least where this surface is in physical contact with a plane workpiece laid on top of the workpiece support, i.e. at least at the support protrusions in the given configuration. In the shown embodiment, the upper edge and the side surfaces are coated by the coating.

The coating may be of any suitable material that is both, heat resistant and without any tendency to form an adhesive bond (material bond, such as weld or solder bond) with metallic workpiece materials. A group of examples of a coating are ceramic coatings.

**Figure 5** shows an alternative grate element 204 the coating of which has an inner layer 243 and an outer layer 244, for example substantially as mentioned hereinbefore, with the inner layer 243 comprising a polymer, for example a thermoplastic polymer, and the outer layer 244 being inorganic and non-metallic. In embodiments, the inner layer 243 comprises a thermoplastic material, especially a thermoplastic material with a high glass transition temperature of for example at least 80°C and/or a high melting point (if defined) of for example at least 200°C, such as a PEEK, PAEK, an LCP, PEK, PPS, a PA, and optionally further containing an inorganic filer, such as SiO₂, FeCrAl and/or FeCrAl+Cr₃C₂ and comprising an outer layer that for example may comprise one of an amorphous or nano-crystallized ZrO₂ or SiO₂ glass, a FeCrAl and/or FeCrAl+Cr₃C₂ ceramics.

In both, the embodiment of Fig. 4 and the embodiment of Fig. 5, the total thickness of the coating may be between 0.001 µm and 1000 µm, especially between 1 µm and 300 µm, for example between 5 µm and 100 µm.

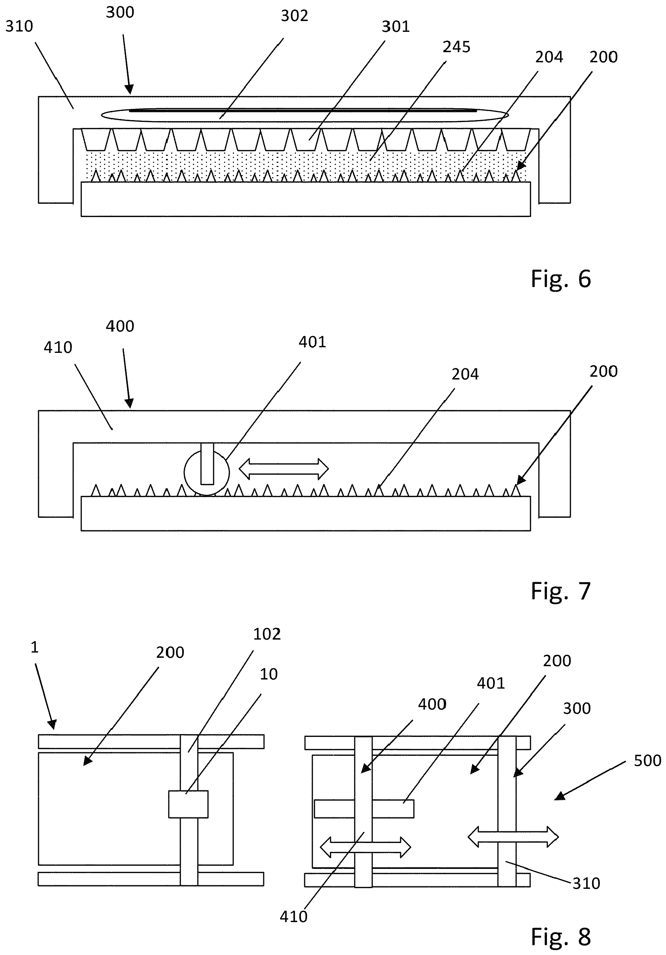

**Figure 6** shows the workpiece support 200 with a coating device. 300. The coating device may belong to the laser cutting machine or may belong to a separate stage (coating/refurbishing stage) of a system. In this, it is possible that the separate stage is shared between different laser cutting machines, for example in a facility having a plurality of laser cutting machines. Especially, it is possible that such coating/refurbishing stage may accommodate workpiece supports of different laser cutting machines, possibly also with different dimensions.

The coating device 300 has a coating device bridge 310 that is for example, similar to the bridge 102 that carries the laser head 10, movable in a direction (y-direction for example) relative to the workpiece support 200. the coating device bridge 310 carries a plurality of spray nozzles 301 for spraying a flowable coating substance as a coating spray 245 onto the grate elements 204. The coating substance sticks to the grate elements and thereafter is subject to a hardening process. In embodiments, hardening may comprise causing energy to impinge on the substance. In the illustrated example, the coating device to this end comprises a UV light source 302 that is integrated into the coating device bridge 310 and is equipped to irradiate the coating substance sprayed onto the grate elements during the spraying process or thereafter. it would also be possible to provide a separate bridge carrying the UV light source (or other energy source).

As an alternative to carrying a plurality of spray nozzles 301 arranged in a row, as depicted in Fig. 6, the coating device bridge could also carry a nozzle head (not shown) movable in the x-direction, similar to the laser cutting head. Other arrangements and moving mechanisms of spray nozzles are possible too, also without a dedicated coating bridge, for example arranging one or more nozzles on a robot arm that has an end movable in both, the x- and the y-direction.

**Figure 7** shows the workpiece support 200 and a grid cleaning device 400 that is equipped to remove material sticking to the grate elements 204 prior to their being coated. In the depicted embodiment, the grid cleaning device 400 comprises a cleaning device bridge 410 that carries a grid cleaning brush 401 that is movable relative to the cleaning device bridge 410 to brush over the grate elements 204. The grid cleaning device 400 may in addition or as an alternative to the brush also comprise other material removal structures, such as a scraper etc. and/or may optionally be equipped for an energy input during the cleaning process, for example an input of mechanical vibration. Also the cleaning device may have a different movement mechanism than the cleaning device bridge, for example a robot arm.

**Figure 8****,** finally, shows a system comprising a laser cutting machine 1 and a separate refurbishing stage 500 that has a cleaning device 400 and a coating device 300 of the above-described kind. The workpiece support 200 or a plurality of workpiece supports 200 may be moved between the laser cutting machine 1 and the refurbishing stage 500.

In a variant, the refurbishing stage has a coating device 400 that does not necessarily have an energy input device for hardening (such as the UV lamp), but the laser cutting machine 1 is programmed to impinge at least the support protrusions with laser energy so as to harden and/or to cause a surface modification, such as glazing.

Also, in variants the system (that still has the coating device) does not necessarily have a cleaning device, but the operators of the system may replace the grate elements 204 when too much material sticks to it. It is an advantage of the present invention that also in such variants the grate elements have a better longevity compared to the prior art because of the coating that reduces the tendency of material to stick to the grate elements.

In all embodiments, the laser cutting machine may be programmed to manufacture the grate elements from a workpiece of appropriate material composition and material thickness.

## Claims

1. A laser cutting machine (1), comprising a laser cutting head (10), a laser source (18), and a workpiece support (200), the machine being equipped for causing a relative movement between the laser cutting head (10) and the workpiece support and being equipped to emit a laser beam (15) from the laser cutting head for making a controlled cut in a workpiece (12) supported by the workpiece support, **characterized in that** the workpiece support (200) comprises a grate of at least one metallic element (241), at least a portion of which is coated by a coating (242).

2. The laser cutting machine according to claim 1, wherein the coating is, at least partially, non-metallic.

3. The laser cutting machine according to claim 2, wherein the coating (242) comprises a at least one of a ceramic material, and a non-ceramic, non-metallic amorphous material.

4. The laser cutting machine according to claim 2 or 3, wherein the coating comprises a polymeric material embedding a filler of at least one of a ceramic material, a non-ceramic, non-metallic amorphous material, a metal oxide, a metal.

5. The laser cutting machine according to any one of the previous claims, wherein the coating (242) comprises at least one first, inner layer (243) and at least one second, outer layer (244).

6. The laser cutting machine according to claim 5, wherein the at least one first, inner layer (243) is at least one of a thermoplastic polymer, optionally with an inorganic filler, a ceramic coating, a glass, and/or a sol-gel, and/or wherein the at least one second, outer layer (244) is at least one of a ceramic coating, a glass, and a sol-gel.

7. The laser cutting machine according to claim 5 or 6, wherein the at least one first, inner layer (243) is of one of a PEEK-SiO₂ mixture, a FeCrAl and/or FeCrAl+Cr₃C₂ ceramics, and wherein the at least one second, outer layer (244) is one of an amorphous or nano crystallized ZrO₂ or SiO₂ glass, a FeCrAl and/or FeCrAl+Cr₃C₂ ceramics.

8. The laser cutting machine according to any one of the previous claims, wherein the coating (242) has a total thickness of 0.001 µm to 1000 µm.

9. The laser cutting machine according to any one of the previous claims, wherein the grate has an array of support spots, wherein at least the support spots are coated by the coating (242), and/or wherein the support spots are in a common horizontal plane, and/or wherein the grate comprises a plurality of grate elements (204), the grate elements being plates arranged vertically and parallel to each other, and/or wherein an upwardly facing edge each of the grate elements is structured to be different from straight, whereby for each grate element a plurality of support spots is formed, wherein the support spots comprise the nonmetallic coating, and/or wherein the upwardly facing edge (221) of each of the grate elements (204) comprises a plurality of support protrusions (222) arranged at regular distances from each other, the support protrusions forming the support spots.

10. A workpiece support (200) for a laser cutting machine (1) according to any one of the previous claims, the workpiece support (200) comprising a grate of at least one metallic grate element (204), at least a support portion of which is coated by the coating (242) which comprises at least one of a ceramic material, and a non-ceramic, non-metallic amorphous material, a polymeric material embedding a filler of at least one of a ceramic material, a non-ceramic, non-metallic amorphous material, a metal oxide, a metal.

11. A system, comprising the laser cutting machine according to any one of claims 1-9 and further comprising a coating device (300) for applying the coating to the grate.

12. The system according to claim 11, further comprising a cleaning device (400) for removing material and coating residues prior to applying the coating.

13. A method of manufacturing the workpiece support according to claim 10, the method comprising the steps of:
providing at least one metal plate;
cutting a plurality of metal grate elements (204) from the at least one metal plate;
coating at least a part of the surfaces of the metal grate elements by the coating (242) to yield a grate element; and
arranging the grate elements (204) to be mounted vertically, parallel to each other and at distances from each other.

14. A method of refurbishing a workpiece support according to claim 10 or a laser cutting machine according to any one of claims 1-9, the method comprising the steps of mechanically removing the coating (242) or at least an outer layer (244) thereof from the grate, and of applying at least one layer (242, 244) of the coating (242) thereafter.
